# EUROPÄISCHE PATENTSCHRIFT

(11) **EP 2 401 518 B1**
(45) Veröffentlichungstag und Bekanntmachung des Hinweises auf die Patenterteilung: **13.03.2013**
(21) Anmeldenummer: 10700804.7
(22) Anmeldetag: 09.01.2010
(51) Int. Cl.: F16D 65/12, F16D 65/78

(54) **INNENBELÜFTETE BREMSSCHEIBE**
INTERNALLY VENTILATED BRAKE DISC
DISQUE DE FREIN À VENTILATION INTÉRIEURE

(30) Priorität: 27.02.2009 DE 102009010973
(43) Veröffentlichungstag der Anmeldung: 04.01.2012
(73) Patentinhaber: Bayerische Motoren Werke Aktiengesellschaft, 80809 München (DE)
(72) Erfinder: KOKOTT, Kordian, 80992 München (DE); NILLERT, Tabea, 15754 Heidesee (DE)
(74) Vertreter: Schmidt, Günter H. H.
(86) Internationale Anmeldenummer: PCT/EP2010/000070
(87) Internationale Veröffentlichungsnummer: WO 2010/097142

(56) Entgegenhaltungen:
- DE-A1- 2 557 649
- DE-A1-102008 016 037
- US-A1- 2005 098 398
- US-B1- 6 536 564
- US-B1- 7 380 645

## Beschreibung

Die Erfindung betrifft eine innenbelüftete Bremsscheibe nach dem Oberbegriff des Anspruchs 1. Zum Stand der Technik wird neben der DE-OS 15 55 186 und der DE 196 52 464 A1 auf die DE 10 2008 016 037 A1 und insbesondere auf die US 6,536,564 B1 verwiesen, die zur Bildung des Oberbegriffs dieses Anspruchs herangezogen ist.

Eine wirksame Kühlung von beispielsweise in Kraftfahrzeugen eingesetzten Bremsscheiben kann von großer Bedeutung sein, weshalb angestrebt wird, in den Zwischenraum der dem Fachmann bekannten innenbelüfteten Bremsscheiben einen ausreichenden aus der Umgebung abgezogenen (Kühl-)Luftstrom zu fördern. In einfacheren Fällen können die zwischen den (beiden) Reibringen einer innenbelüfteten Bremsscheibe vorgesehenen Rippen die Förderung des Luftstroms bewirken, wobei es bekannt ist, eine abseits bzw. seitlich der Bremsscheibe vorgesehene Schutzabdeckung mit geeigneten Luftleit-Vorrichtungen zu versehen, die einen ausreichenden Kühlluftstrom sicherstellen sollen. Während sich bei diesen bekannten Schutzabdeckungen die Luftleit-Vorrichtungen auch bei rotierender Bremsscheibe relativ zum Fahrzeug nicht bewegen, sind weiterhin Bremsscheiben mit daran befestigten Luftleitschaufeln oder Luftschaufeln bekannt, welche sich bei rotierender Bremsscheibe dann selbstverständlich zusammen mit dieser relativ zum Fahrzeug bewegen, d.h. um die Drehachse der Bremsscheibe rotieren. Naturgemäß können solchermaßen rotierende Luftschaufeln besonders wirkungsvoll einen Kühlluftstrom fördern, und bei geeigneter Anordnung insbesondere auch in den Zwischenraum zwischen den beiden Reibringen einer innenbelüfteten Bremsscheibe.

Die eingangs genannte DE 10 2008 016 037 A1 zeigt eine Bremsscheibe mit solchermaßen daran angeordneten Luftschaufeln, welche durch geeignet verlängerte Rippen gebildet sind, die sich in Radialrichtung betrachtet über die Reibringe hinaus über eine gewisse Strecke in Richtung der Drehachse der Bremsscheibe erstrecken und hierbei geeignet geformt sind. Beispielsweise können diese Rippen gegenüber der Reibring-Oberfläche geneigt sein und somit nicht senkrecht auf dieser stehen, oder es können die sich über die Reibringe hinaus erstreckenden Fortsätze der Rippen geeignet gebogen verlaufen.

Die gießtechnische Herstellung solcher speziell geformter Rippen und somit die gießtechnische Herstellung einer solchen Bremsscheibe in ihrer Gesamtheit ist jedoch relativ aufwändig. In der eingangs weiterhin genannten US 6,536,564 B1 findet sich ferner der Hinweis, dass solche Luftschaufeln alternativ auch eigenständige und an der Bremsscheibe befestigte Bauteile sein können, aber auch eine individuelle Befestigung einer Vielzahl einzelner Luftschaufeln ist relativ aufwändig.

Deshalb soll hiermit eine demgegenüber vereinfachte Bremsscheibe nach dem Oberbegriff des Patentanspruchs 1 aufgezeigt werden (= Aufgabe der vorliegeriden Erfindung). Die Lösung dieser Aufgabe ist dadurch gekennzeichnet, dass die Luftschaufeln aus einem Blechring herausgearbeitet sind und somit ein zusammenhängendes Blechteil bilden, welches mit zumindest einigen der Rippen verbunden ist. Vorteilhafte Aus und Weiterbildungen sind Inhalt der Unteransprüche..

Sind wie vorgeschlagen die Luftschaufeln durch ein zunächst eigenständiges Blechteil gebildet, so wird die Herstellung insbesondere komplexer geformter Luftschaufeln gegenüber dem nächstkommenden Stand der Technik erheblich vereinfacht. Auf einfache Weise können somit selbst komplex Formen hergestellt werden, die auf ihre Funktion hin, nämlich einen Luftstrom zu fördern, bestmöglich ausgelegt werden bzw. sein können. Obwohl jede einzelne Luftschaufel durch ein eigenständiges Blechteil gebildet sein könnte, ist es fertigungstechnisch einfacher, mehrere Luftschaufeln zu einem Blechteil zusammenzufassen, insbesondere was die Befestigung der Luftschaufeln an der Bremsscheibe betrifft. Diese Befestigung kann ohne Beeinträchtigung der Reibringe am Besten an den genannten Rippen zwischen den Reibringen erfolgen, wobei ausdrücklich nicht jede dieser Rippen zur Befestigung des oder der Luftschaufel-Bleichteile(s) herangezogen werden muss. Vielmehr kann es ausreichend sein, eine Befestigung an nur einigen Rippen vorzugehen, insbesondere wenn die Luftschaufeln erfindungsgemäß aus einem Blechring herausgearbeitet sind und ein zusammenhängendes Blechteil bilden.

Was die Befestigung des Luftschaufel-Blechteiles an Rippen der Bremsscheibe betrifft, so kommen hierfür unterschiedlichste Verbindungstechniken in Frage. Beispielsweise kann das Luftschaufel-Blechteil stoffschlüssig mit Rippen verbunden sein und hierbei insbesondere eingegossen sein. Es ist jedoch auch möglich, das Luftschaufel-Blechteil formschlüssig mit einer oder mehreren Rippen zu verbinden, beispielsweise durch "Aufclipsen" mittels flexibler Klemmschellen. Bevorzugt erfolgt dies mit einem die Luftschaufeln tragenden Blechring, der im Hinblick auf ein einfaches Anbringen an der Bremsscheibe nicht geschlossen, sondern offen, d.h. unterbrochen und dabei zumindest geringfügig flexibel ausgebildet ist. Schließlich ist es noch möglich, das Luftschaufel-Blechteil kraftschlüssig mit Rippen zu verbinden, beispielsweise anzunieten oder anzuschrauben.

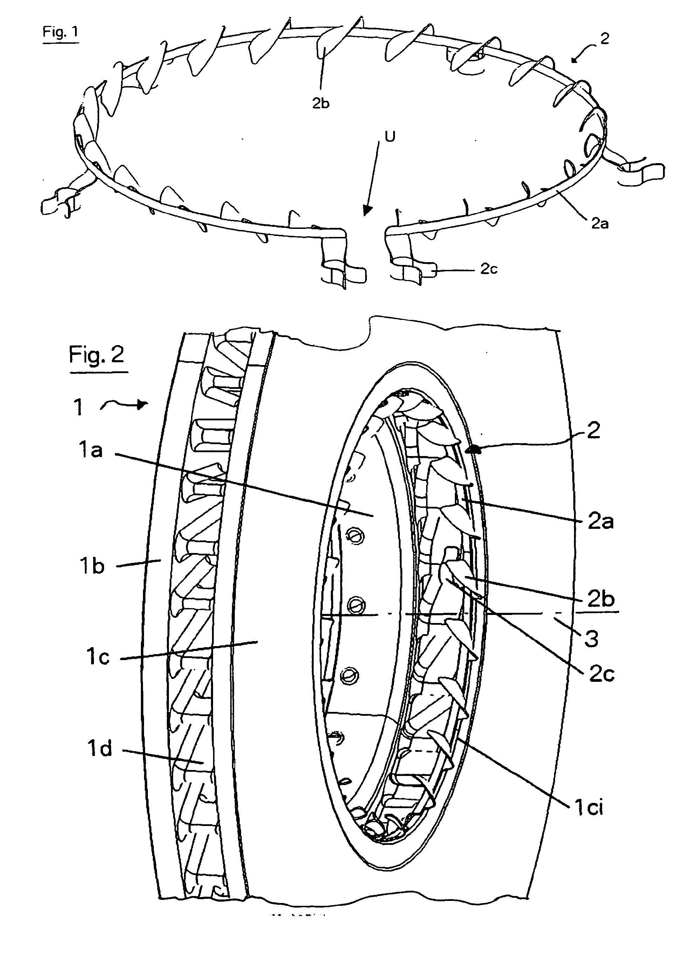

Die beiden beigefügten Figuren zeigen ein Ausführungsbeispiel der vorliegenden Erfindung jeweils in räumlicher Darstellung, und zwar zeigt Figur 1 ein Luftschaufel-Blechteil in Form eines Blechringes, der/das gemäß Figur 2 an einer innenbelüfteten Bremsscheibe befestigt werden kann bzw. an einer solchen befestigt ist.

Mit der Bezugsziffer 1 ist in ihrer Gesamtheit eine innenbelüftete Bremsscheibe gekennzeichnet, die für den Einsatz an einem Personenkraftwagen vorgesehen und wie hierbei grundsätzlich üblich aufgebaut ist und neben einem sog. Bremsscheibentopf 1a, über welchen sie am jeweiligen Radträger oder dgl. befestigt werden kann, zwei voneinander beabstandete Reibringe 1b, 1c aufweist, die über Rippen 1d miteinander verbunden sind. Dabei ist der bei am Fahrzeug montierter Bremsscheibe außen liegende Reibring 1 b mit dem Bremsscheibentopf 1a verbunden, während der andere dann innen liegende Reibring 1c über die Rippen 1d vom außen liegenden Reibring 1b getragen wird (vgl. Fig.2). Die Drehachse dieser Bremsscheibe ist mit der Bezugsziffer 3 gekennzeichnet, während die dieser Drehachse 3 zugewandte Wand des innen liegenden Reibrings 1 c als Innenumfang 1 ci gekennzeichnet ist.

Weiterhin ist ein sog. Luftschaufel-Blechteil 2 vorgesehen (vgl. zunächst Fig.1), welches durch einen im durch einen Pfeil "U" gekennzeichneten Bereich offenen Blechring 2a gebildet wird, an welchem über dem Umfang im Wesentlichen gleichförmig verteilt mehrere Luftschaufeln 2b angeformt sind, die sich in Radialrichtung betrachtet über eine gewisse Strecke zum Mittelpunkt des Blechrings 2a hin nach innen erstrecken. Weiterhin sind an diesen Blechring 2a jeweils über Füße mehrere Klemmschellen 2c angeformt, die sich in Radialrichtung nach außen, d.h. vom Mittelpunkt des Blechrings 2a weg erstrecken. Dieses Luftschaufel-Blechteil 2 kann durch bekannte Umformtechniken hergestellt werden. Wie Fig.2 zeigt, ist das Luftschaufel-Blechteil 2 über die Klemmschellen 2c an den bezüglich der Drehachse 3 der Bremsscheibe 1 "inneren" Enden von einigen der Rippen 1d befestigt, indem die Klemmschellen 2c auf diese Rippen-Enden aufgesteckt sind, wobei der Blechring 2a im Wesentlichen am Innenumfang 1 ci des Reibrings 1 c zum Anliegen kommt. Dieses Aufstecken kann im durch die beiden Reibringe 1b, 1c (sowie durch den Innenumfang 1 ci des letztgenannten) begrenzten zentralen Hohlraum einfach erfolgen, da der Blechring 2a des Luftschaufel-Blechteils wie beschrieben offenen und geringfügig flexibel, d.h. in Grenzen verformbar ist, wobei dessen Mittelpunkt im an der Bremsscheibe 1 montierten Zustand im wesentlichen auf der Drehachse 3 derBremsscheibe 1 zum Liegen kommt.

Die an den Blechring 2a angeformten Luftschaufeln 2b sind im verbauten Zustand des Luftschaufel-Blechteils 2 (gemäß Fig.2) dann solchermaßen positioniert, dass diese bei rotierender Bremsscheibe 1 einen Luftstrom in oder durch den Zwischenraum zwischen den beiden Reibringen 1b, 1c fördern. Hierzu erstrecken sich die Luftschaufeln 2b vom am Innenumfang 1ci des Reibrings 1c anliegenden Blechring 2a ausgehend in radialer Richtung um ein gewisses Maß zur Drehachse 3 der Bremsscheibe 1 hin und es ragen im vorliegenden Ausführungsbeispiel diese Luftschaufeln 2b seitlich, d.h. in Richtung der Drehachse 3 der Bremsscheibe 1 betrachtet, über den nicht direkt am Bremsscheibentopf 1a befestigten (und somit bei am Fahrzeug montierter Bremsscheibe 1 inneren) Reibring 1c hinaus. Ausdrücklich darauf hingewiesen sei noch, dass durchaus eine Vielzahl von Details abweichend von obigen Erläuterungen gestaltet sein können, ohne den Inhalt der Patentansprüche zu verlassen; insbesondere muss das sog. Luftschaufel-Blechteit 2 keineswegs aus einem Metallblech gefertigt sein, vielmehr ist beispielsweise auch eine Ausführung in Kunststoff (und dann vorzugsweise als Spritzgussteil) möglich.

## Patentansprüche

1. Innenbelüftete Bremsscheibe mit zumindest zwei durch Rippen (1d) voneinander beabstandet gehaltenen Reibringen (1b, 1 c) sowie mit an der Bremsscheibe (1) befestigten Luftschaufeln (2b), die als eigenständige Bauteile an der Bremsscheibe befestigt sind und sich im wesentlichen vom Innenumfang eines Reibrings (1c) ausgehend in Radialrichtung um ein gewisses Maß in Richtung der Drehachse (3) der Bremsscheibe (1) erstrecken, um bei rotierender Bremsscheibe (1) durch den Raum zwischen den Reibringen (1b, 1c) einen Kühlluftstrom zu fördern,
**dadurch gekennzeichnet, dass** die Luftschaufeln (2b) aus einem Blechring (2a) herausgearbeitet sind und somit ein zusammenhängendes Blechteil (2) bilden, welches mit zumindest einigen der Rippen (1d) verbunden ist.

2. Innenbelüftete Bremsscheibe nach Anspruch 1, **dadurch gekennzeichnet, dass** das Luftschaufel-Blechteil (2) stoffschlüssig mit Rippen (1d) verbunden, insbesondere eingegossen ist.

3. Innenbelüftete Bremsscheibe nach Anspruch 1, **dadurch gekennzeichnet, dass** das Luftschaufel-Blechteil (2) formschlüssig mit Rippen (1d) verbunden ist.

4. Innenbelüftete Bremsscheibe nach Anspruch 1, **dadurch gekennzeichnet, dass** das Luftschaufel-Blechteil (2) kraftschlüssig mit Rippen (1d) verbunden, insbesondere angenietet oder angeschraubt ist.

5. Innenbelüftete Bremsscheibe nach einem der vorangegangenen Ansprüche, **dadurch gekennzeichnet, dass** der Blechring (2a) mit mehreren Klemmschellen (2c) oder Clipsen zur formschlüssigen Verbindung mit Rippen (1d) versehen und nicht geschlossen ausgebildet ist.

## Claims

1. An internally ventilated brake disc with at least two friction rings (1b, 1c) held spaced apart from one another by ribs (1d) and with air blades (2b), which are fastened to the brake disc (1) and which are fastened as independent components to the brake disc and extend substantially proceeding from the inner periphery of a friction ring (1c) in the radial direction by a specific amount in the direction of the rotational axis (3) of the brake disc (1) in order to deliver a cooling air flow through the space between the friction rings (1b, 1 c) when the brake disc (1) is rotating, **characterised in that** the air blades (2b) are machined out of a sheet metal ring (2a) and thus form an integral sheet metal part (2), which is connected to at least some of the ribs (1d).

2. An internally ventilated brake disc according to claim 1, **characterised in that** the air blade sheet metal part (2) is connected to ribs (1 d) in a material-uniting manner, more especially moulded in.

3. An internally ventilated brake disc according to claim 1, **characterised in that** the air blade sheet metal part (2) is positively connected to ribs (1d).

4. An internally ventilated brake disc according to claim 1, **characterised in that** the air blade sheet metal part (2) is adhered to ribs (1d), more especially riveted or screwed on.

5. An internally ventilated brake disc according to any one of the preceding claims, **characterised in that** the sheet metal ring (2a) is provided with a plurality of clamps (2c) or clips for positive connection to ribs (1d), and is not formed so as to be closed.

## Revendications

1. Disque de frein à ventilation interne comportant au moins deux anneaux de friction (1b, 1c) maintenus à distance l'un de l'autre par des nervures (1d), ainsi que des aubes de ventilation (2b) fixées au disque de frein (1) sous la forme d'éléments indépendants et qui s'étendent essentiellement à partir de la périphérie interne d'un anneau de friction (1c) sur une longueur déterminée en direction de l'axe de rotation (3) du disque de frein (1) pour produire, un courant d'air de refroidissement lorsque le disque de frein (1) tourne au travers de l'espace situé entre les anneaux de friction (1b, 1c),
**caractérisé en ce que**
les aubes de ventilation (2b) sont usinées à partir d'un anneau en tôle (2a) et forment ainsi un élément de tôle (2) continu qui est relié avec au moins certaines des nervures (1d).

2. Disque de frein à ventilation interne conforme à la revendication 1,
**caractérisé en ce que**
l'élément de tôle (2) constituant les aubes de ventilation est relié aux nervures (1d), par une liaison par la matière et est en particulier coulé dans celles-ci.

3. Disque de frein à ventilation interne conforme à la revendication 1,
**caractérisé en ce que**
l'élément de tôle (2) constituant les aubes de ventilation est relié aux nervures (1d) par une liaison par la forme.

4. Disque de frein à ventilation interne conforme à la revendication 1,
**caractérisé en ce que**
l'élément de tôle (2) constituant les aubes de ventilation est relié aux nervures (1d) par une liaison par la force et est en particulier rivé ou vissé sur celles-ci.

5. Disque de frein à ventilation interne conforme à l'une des revendications précédentes,
**caractérisé en ce que**
l'anneau en tôle (2a) est équipé de plusieurs colliers de serrage (2c) ou de clips pour permettre sa liaison par la forme avec les nervures (1d) et n'est pas réalisé fermé.
